# EUROPÄISCHE PATENTSCHRIFT

(11) **EP 1 827 185 B1**
(45) Veröffentlichungstag und Bekanntmachung des Hinweises auf die Patenterteilung: **31.12.2008**
(21) Anmeldenummer: 05801059.6
(22) Anmeldetag: 14.11.2005
(51) Int. Cl.: A47J 31/44, A47J 31/46

(54) **HÖHENVERSTELLBARER GETRÄNKEAUSLAUF**
HEIGHT-ADJUSTABLE BEVERAGE DISTRIBUTOR
SYSTEME DE DISTRIBUTION DE BOISSON REGLABLE EN HAUTEUR

(30) Priorität: 17.11.2004 CH 18902004
(43) Veröffentlichungstag der Anmeldung: 05.09.2007
(73) Patentinhaber: JURA ELEKTROAPPARATE AG, 4626 Niederbuchsiten (CH)
(72) Erfinder: REYHANLOO, Shahryar, 4573 Lohn Ammansegg (CH)
(74) Vertreter: EGLI-EUROPEAN PATENT ATTORNEYS
(86) Internationale Anmeldenummer: PCT/CH2005/000671
(87) Internationale Veröffentlichungsnummer: WO 2006/053456

(56) Entgegenhaltungen:
- DE-A1- 10 239 595
- DE-U1- 20 017 859

## Beschreibung

Die Erfindung betrifft eine Getränkebereitungsmaschine, insbesondere eine Kaffeemaschine mit einem höhenverstellbaren Getränkeauslauf, nach Patentanspruch 1.

Die Höhenverstellbarkeit des Getränkeauslaufs bei derartigen Maschinen wurde hauptsächlich eingeführt, um Trinkgefässe verschiedener Grössen problemlos füllen zu können. So soll zum Beispiel vermieden werden, dass sehr kleine Trinkgefässe, wie z.B. Espressotassen, aus relativ grosser Höhe mit einem Flüssigkeitsstrahl gefüllt werden müssen. Es gibt allerdings einen weiteren Grund für die Wünschbarkeit einer Höhenverstellung des Getränkeauslaufs. Bekanntlich gewinnt die Bildung eines ästhetisch und geschmacklich befriedigenden Schäumchens auf dem Kaffee, auch "Crema" genannt, zunehmend an Bedeutung. Die Qualität einer Crema hängt unter anderem auch vom Abstand zwischen dem Auslaufende eines Getränkeauslaufrohres und dem Einfüllspiegel des ausgegebenen Kaffeeproduktes in ein bereitgestelltes Trinkgefäss ab. Die feinporige Crema wird in der Kaffeemaschine erzeugt und bleibt am besten erhalten, wenn das Kaffeeprodukt sanft und aus geringem Abstand in das Trinkgefäss eingefüllt wird. Werden grössere Abstände gewählt, so hat das herunterfallende Getränk die Tendenz, die feinporige Crema wieder zu zerstören und zudem auch noch grossblasigen Schaum zu bilden, der schneller wieder in sich zusammenfällt.

Die DE-200 17 859-U1 beschreibt eine Kaffeemaschine, bei der ein Kaffeeauslauf zusammen oder unabhängig von einer Frontplatte oder Frontblende in der Höhe verschiebbar ist. Es wird erwähnt, dass anstelle einer manuellen Verschiebung auch eine Verstellung über einen geeigneten Antrieb vorhanden sein kann. Das Thema der Crema-Qualität durch Veränderung des "Ausflussabstandes" ist von dieser Veröffentlichung allerdings nicht berührt.

Die EP-0 878 158 und die US-5 638 740 befassen sich zwar mit dem Thema der Crema-Qualität bei Kaffee- oder Espressomaschinen, allerdings zeigen sie lediglich die bekannten Massnahmen in der Form von geeigneten, im Getränkeauslaufteil eingebauten Zwischenkammern oder Crema-Kammern, in denen der gewünschte kleinblasige Schaum durch Einspritzen von Kaffee oder Espresso bereits vor dem Auslauf in die bereitgestellten Tassen erzeugt wird. Auch diese Veröffentlichungen befassen sich nicht mit dem Einfluss des "Ausflussabstandes" auf die in den Tassen letztlich vorhandene und sichtbare Crema.

Aus der DE 102 39 595 A1 ist ferner eine Abgabevorrichtung für Getränke oder dergleichen bekannt. Die Abgabevorrichtung umfasst eine Erkennungseinrichtung zum Erkennen einer vertikalen Höhe eines Geschirrs zur Aufnahme des Lebensmittels und zum Abgeben eines Höhensignals, eine Fülleinrichtung, die in ihrer Höhe relativ zum Geschirr verstellbar angeordnet ist, und eine Steuereinrichtung, die auf das Höhensignal hin die Fülleinrichtung in eine Voreinstellbare Füllhöhe zum Geschirr verstellt, bevor das Lebensmittel in das Geschirr gefüllt wird. Das Thema der Crema-Qualität durch Veränderung des "Ausflussabstandes" ist auch von dieser Veröffentlichung nicht berührt.

Aufgabe der Erfindung ist es deshalb, einen höhenverstellbaren Getränkeauslauf für eine Getränkebereitungsmaschine anzugeben, mit dem die erzeugbare und sichtbare Crema-Qualität, insbesondere bei Kaffee- und Espressogetränken, weiter zu verbessern.

Diese Aufgabe wird durch die Merkmale des Patentanspruchs 1 gelöst.

Die Lösung dieser Aufgabe geht davon aus, dass während des ganzen Einfüllvorganges (Einfüllen eines Kaffeeproduktes in das bereitgestellte Trinkgefäss) ein Abstand A zwischen dem Auslaufende eines Getränkeauslaufrohres und dem Einfüllspiegel des ausgegebenen Getränkes in ein bereitgestelltes Trinkgefäss möglichst klein und möglichst konstant gehalten wird.

Da der Einfüllspiegel des ausgegebenen Getränkes im bereitgestellten Trinkgefäss während des Einfüllens dauernd ansteigt, wird der höhenverstellbare Getränkeauslauf für die Dauer der Getränkeausgabe im wesentlichen etwa im gleichen Masse selbsttätig nach oben mitbewegt. Damit werden die gewünschten (möglichst) konstanten Ausgabeverhältnisse erzielt.

Dabei gilt allerdings zu bedenken, dass bei einer normalen und gängigen Kaffeemaschine, die lediglich über eine manuelle Einstellmöglichkeit für die Höhe des Getränkeauslaufes verfügt, grundsätzlich damit zu rechnen ist, dass sich die Verhältnisse für eine gute Crema-Bildung und damit für einen geschmackvollen Kaffee im Laufe der Getränkeausgabe eher verbessern, da sich bei der Getränkeausgabe der Abstand zwischen dem Auslaufende des (für die Dauer der Ausgabe feststehenden) Getränkeauslaufrohres und dem Einfüllspiegel des ausgegebenen Getränkes in ein bereitgestelltes Trinkgefäss ständig verkleinert. Voraussetzung für zufriedenstellende Crema-Bildung ist aber auch hier eine gute Grundeinstellung für die Höhe des Getränkeauslaufs. Es ist allerdings zu vermuten, dass viele Anwender die bestmögliche Grundeinstellung für eine möglichst gleichmässige und feinporige Crema-Bildung weder kennen noch beachten, und dass sich zudem die meisten gängigen Kaffee- und Espressomaschinen wegen des in der Regel im horizontalen Abstand fixen Doppelrohrauslaufes für Kaffee oder Espresso gar nicht so einstellen lassen, dass eine optimale Crema-Bildung bei der Ausgabe eines einzelnen Espressos überhaupt möglich wäre.

Bei der vorliegenden Erfindung wird davon ausgegangen, dass optimale Verhältnisse zur Crema-Erhaltung dann entstehen, wenn der Abstand zwischen dem Auslaufende des Getränkeauslaufrohres und dem Einfüllspiegel des ausgegebenen Getränkes möglichst lange möglichst klein und konstant bleibt. Ersteres kann erfindungsgemäss erreicht werden, wenn das zumindest eine Auslaufrohr der Getränkebereitungsmaschine zu Beginn des Einfüllvorganges - also zumindest in einer Startposition - in das unterstellte Trinkgefäss hineinragt. Dies ist bei Auslaufrohrgruppen mit zwei in horizontalem Abstand verstellbaren Auslaufrohren in der Regel auch bei kleinen Trinkgefässen ohne weiteres möglich.

In einer ersten bevorzugten Ausführungsform der Erfindung ist der höhenverstellbare Kaffeeauslauf deshalb so ausgestaltet, dass der Getränkeauslauf manuell und motorisch mittels der Antriebseinheit in der Höhe verstellbar ist. Die manuelle Verstellbarkeit ermöglicht es, dass der höhenverstellbare Kaffeeauslauf nach der Platzierung des Trinkgefässes vom Anwender zunächst von Hand in eine geeignete (oben beschriebene) Startposition bewegbar ist. Die motorische Verstellbarkeit ermöglicht es, dass der höhenverstellbare Getränkeauslauf nach der Auslösung der Getränkeausgabe aus dieser Startposition und im wesentlichen für die Dauer der Getränkeausgabe selbsttätig nach oben bewegbar ist.

Zur Realisierung dieser Ausführungsform genügt es, dass für die selbsttätige Höhenverstellung des Getränkeauslaufs aus der Startposition eine Steuerung vorhanden ist und die Geschwindigkeit der Höhenverstellung aus der Startposition einstellbar oder in der Steuerungseinheit programmierbar ist. Es kann nämlich davon ausgegangen werden, dass einer solchen Steuerung aufgrund der Wahl oder Vorwahl der Getränkeart sowohl Art (bzw. Grösse) als auch Anzahl der unterstellten Trinkgefässe prinzipiell bekannt sind. Aufgrund der ebenfalls bekannten Ausflussraten kann somit die notwendige Geschwindigkeit der Höhenverstellung des Getränkeauslaufs abgeleitet werden.

Selbstverständlich kann auch vorgesehen sein, dass für die selbsttätige Höhenverstellung des Getränkeauslaufes aus der Startposition eine Regelung vorhanden ist. Mit einer solchen Regelung kann ein Abstand A zwischen dem Auslaufende des Getränkeauslaufrohres (oder der Getränkeauslaufrohre) und dem Einfüllspiegel eines ausgegebenen Getränkes in ein bereitgestelltes Trinkgefäss mittels einer fortwährenden Messung des Abstandes A im wesentlichen konstant gehalten werden. Vorteilhaft gegenüber der einfacheren Version mit einer Steuerung ist hier, dass eventuelle Abweichungen des einzuhaltenden Abstandes A sofort aufgefangen und auskorrigiert werden können.

In einer zweiten bevorzugten Ausführungsform der Erfindung ist der höhenverstellbare Kaffeeauslauf wiederum so ausgestaltet, dass der Getränkeauslauf manuell und motorisch mittels der Antriebseinheit in der Höhe verstellbar ist. Die manuelle Verstellbarkeit soll es ermöglichen, im Falle einer Störung oder eines Ausfalles der motorischen Höhenverstellung den Kaffeeauslauf dennoch verschieben zu können. Die motorische Verstellbarkeit ermöglicht es einerseits, dass eine geeignete Startposition für den höhenverstellbaren Getränkeauslauf nach der Auslösung einer Getränkeausgabe auch selbsttätig ansteuerbar bzw. einnehmbar ist. Auch hier kann grundsätzlich davon ausgegangen werden, dass einer Steuerung aufgrund der Vorwahl der Getränkeart sowohl Art (bzw. Grösse) als auch Anzahl der unterstellten Trinkgefässe und deshalb prinzipiell auch (zumindest approximativ) die zugehörigen Startpositionen bekannt sind. Andererseits ermöglicht es die motorische Verstellbarkeit dann auch wieder, analog zur ersten beschriebenen Ausführungsform, den höhenverstellbaren Getränkeauslauf anschliessend aus der Startposition und im wesentlichen für die Dauer der Getränkeausgabe nach oben zu bewegen.

Selbstverständlich kann auch bei dieser Ausführungsform wiederum eine Steuerung oder eine Regelung zur selbsttätigen Höhenverstellung des Getränkeauslaufes aus der Startposition vorhanden sein.

Wie erwähnt, könnte die Festlegung der Startpositionswerte in der Steuerungseinheit prinzipiell aus der Kenntnis der Getränkewahl und der Art und Anzahl der verwendeten Trinkgefässe erfolgen. Da ein solches Vorgehen den individuellen Gepflogenheiten der Anwender aber meist zu wenig Rechnung trägt, ist es auch möglich, die Startpositionswerte durch den Anwender in einer Lern- bzw. Programmierphase aufgrund seiner individuellen Präferenzen hinsichtlich der von ihm verwendeten Trinkgefässe ermitteln und in der Steuerungseinheit speichern zu lassen. Eine weitere Möglichkeit besteht auch darin, eine Trinkgefässerkennungsvorrichtung vorzusehen. Dies kann beinhalten, dass die Trinkgefässe beispielsweise mit maschinenerkennbaren Kennzeichnungen versehen werden. Es kann alternativ aber auch beinhalten, dass die Trinkgefässerkennungsvorrichtung einen Sensor oder eine Sensoreinrichtung umfasst, der/die die Grösse und Anzahl der bereitgestellten Trinkgefässe erkennt. In beiden Fällen kann die Steuerungseinheiten dann aufgrund gespeicherter Vergleichswerte geeignete Startpositionswerte bereitstellen.

Der erfindungsgemässe höhenverstellbare Getränkeauslauf ermöglicht es somit grundsätzlich, dass die Crema beim Kaffeeprodukt in einer besseren und konstanteren Qualität erhalten bleibt. Wegen der Möglichkeit, den Abstand A zwischen dem Auslaufende des Getränkeauslaufrohres (oder der Getränkeauslaufrohre) und dem Einfüllspiegel des ausgegebenen Getränkes in ein bereitgestelltes Trinkgefäss während des ganzen Getränkeausgabevorganges möglichst klein und möglichst konstant zu halten, bleibt die in der Brühvorrichtung erzeugte Crema gleichmässig und sehr kompakt. Deshalb zerfällt sie auch nur sehr langsam. Dies ergibt somit die gewünschte ästhetisch und geschmacklich ansprechende Crema. Zusätzlich erreicht man natürlich auch, dass das Verspritzen des Getränkes durch den auftreffenden Flüssigkeitsstrahl gering gehalten wird.

Die erwähnten Verbesserungen können grundsätzlich somit bereits mit relativ einfachen technischen Mitteln erreicht werden. Grundsätzlich genügen nämlich einfache Steuerungsmittel um den Getränkeauslauf während einer Getränkeausgabe selbsttätig nach oben zu bewegen. Selbstverständlich können zusätzliche Komfortfunktionen, wie selbsttätige Regelung des Abstandes, selbsttätiges Einnehmen der Startposition oder selbsttätige Erkennung der Trinkgefässe, einzeln oder in Kombination, ebenfalls vorhanden sein. So kann beispielsweise zusätzlich auch vorgesehen sein, dass sich der Getränkeauslauf nach Beendigung einer Getränkeausgabe selbsttätig in eine Grund- oder Ausgangsstellung bewegt.

In der einzigen Figur wird im folgenden die vorliegende Erfindung im Detail näher erläutert.

Dabei zeigt:

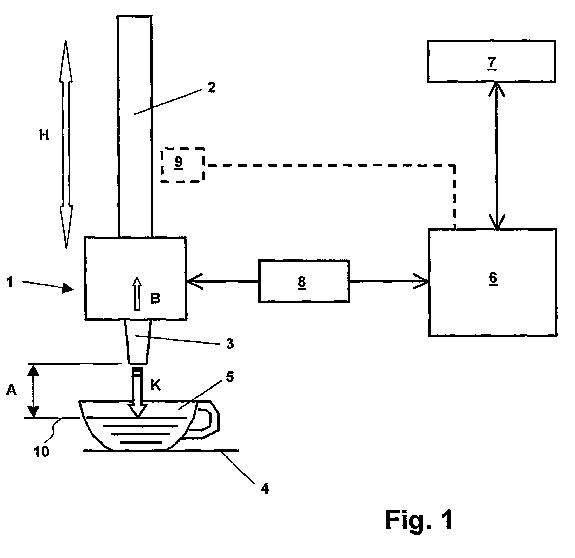

- Fig. 1: Eine Prinzipdarstellung eines erfindungsgemässen höhenverstellbaren Getränkeauslaufes.

In prinzipieller Darstellung ist in der Figur 1 ein in der Höhe H verstellbarer Getränkeauslauf 1 für eine Getränkebereitungsmaschine dargestellt. Der Getränkeauslauf 1 bewegt sich in einer Führung 2 und hat zumindest ein Auslaufrohr 3. Das Getränkeauslaufrohr 3 kann dabei zu einer Auslaufrohrgruppe mit mehreren Auslaufrohren für gleiche oder verschiedene Fluide wie Kaffee, Espresso, Milch, Wasser oder Dampf gehören.

Auf einer Abstellfläche 4 kann ein Trinkgefäss 5 oder sonstiges Gefäss unter den Getränkeauslauf 1 gestellt werden. Die Getränkebereitungsmaschine hat ferner eine Steuerungseinheit 6 sowie Bedienelemente 7 zur Bedienung der Getränkebereitungsmaschine. Die Bedienelemente 7 können auch zur Programmierung der Getränkebereitungsmaschine oder für Parametereingaben vorgesehen sein. Mit der Steuerungseinheit 6 werden die Funktionen der Getränkebereitungsmaschine gesteuert. Sie kann deshalb in heute gängiger Weise einen Mikroprozessor sowie Speichermittel und dergleichen zur Realisierung dieser Funktionen enthalten.

Eine Antriebseinheit 8 für die Höhenverstellung des Getränkeauslaufes 1 wird von der Steuerungseinheit 6 gesteuert. Die Höhenverstellung des Getränkeauslaufes 1 kann manuell oder über die Antriebseinheit 8 erfolgen. Diese beiden Möglichkeiten sind vorgesehen, weil einerseits zur Realisierung des Erfindungsgedankens auch Betriebsarten möglich sind, bei denen teilweise auch manuelle Höheneinstellungen vorzunehmen sind, anderseits aber auch, weil im Falle von Störungen oder Blockaden trotzdem eine (zumindest manuelle) Höhenverstellung des Getränkeauslaufes möglich sein soll. Die Antriebseinheit 8 enthält deshalb einen Motor sowie ein Sicherheitsmittel zur Entkopplung, beispielsweise eine Rutschkupplung (nicht dargestellt).

Ein mit der Steuerungseinheit 6 verbundener Positionssensor 9 zur Erfassung der Ist-Position (aktuell gemessene Höhe) des Getränkeauslaufes 1 kann ebenfalls vorhanden sein. Es gibt allerdings einfache Realisierungsvarianten des Erfindungsgedankens, bei denen ein Positionssensor 9 nicht vorhanden sein muss.

Es können zudem weitere (nicht dargestellte) Sensoren vorhanden sein, die benötigt werden, um beispielsweise Funktionen mit einem höheren Automatisierungsgrad, zu realisieren (siehe auch weiter unten).

Ein Abstand A definiert die freie Distanz zwischen dem Auslaufende des Auslaufrohres 3 und dem Einfüllspiegel 10 eines ausgegebenen Getränkes im bereitgestellten Trinkgefäss 5. Während einer Getränkeausgabe, beispielsweise während der Ausgabe eines Kaffeeproduktes, strömt Kaffee (indiziert mit dem Pfeil K) aus dem Auslaufrohr 3 in das Trinkgefäss 5, wodurch der Einfüllspiegel 10 im Trinkgefäss 5 ständig ansteigt. Auf der Oberfläche des Einfüllspiegels 10 sammelt sich die sog. Crema, also der erwähnte und erwünschte feinporige Kaffeeschaum.

Funktionsbeschreibung von zwei bevorzugten Ausführungsvarianten:

In einer ersten bevorzugten Ausführungsform der Erfindung ist der höhenverstellbare Kaffeeauslauf 1 manuell oder motorisch mittels der Antriebseinheit 8 in der Höhe H verstellbar. Die manuelle Verstellbarkeit ermöglicht es, dass der Kaffeeauslauf 1 nach der Platzierung des Trinkgefässes 5 auf der Abstellfläche 4 vom Anwender zunächst von Hand in eine geeignete Startposition bewegbar ist. Eine geeignete Startposition ist erreicht, wenn sich das Auslaufende des Auslaufrohres etwa auf der Höhe des Trinkgefässrandes oder etwas unterhalb desselben befindet. Daraufhin wird die gewünschte Getränkeausgabe mittels der Bedienelemente 7 ausgelöst. Während der Getränkeausgabe wird der Getränkeauslauf 1 mittels der Steuerungseinheit 6 und der Antriebseinheit 8 im wesentlichen für die Dauer der Getränkeausgabe selbsttätig etwa in dem Mass nach oben (Richtung B) bewegt, in dem der Einfüllspiegel des ausgegebenen Getränkes im Trinkgefäss 5 ansteigt.

Zur Realisierung dieser Ausführungsform genügt es, dass für die selbsttätige Höhenverstellung des Getränkeauslaufs aus der Startposition eine einfache Steuerung vorhanden ist. Ein Positionssensor 9 muss nicht vorhanden sein. Allerdings muss die Geschwindigkeit der Höhenverstellung aus der Startposition einstellbar oder in der Steuerungseinheit programmierbar sein. Bei dieser Ausführungsform kann davon ausgegangen werden, dass der Steuerung (bei der Auslösung der Getränkeausgabe) aufgrund der Vorwahl der Getränkeart sowohl Art (z.B. Kaffee, Espresso oder Cappuccino und somit auch die ungefähre Tassengrösse) als auch Anzahl der unterstellten Trinkgefässe prinzipiell bekannt sind. Zusammen mit den ebenfalls bekannten Ausflussraten kann somit die notwendige approximative Geschwindigkeit der Höhenverstellung des Getränkeauslaufs abgeleitet werden.

In einer zweiten bevorzugten Ausführungsform der Erfindung ist der höhenverstellbare Kaffeeauslauf 1 grundsätzlich motorisch mittels der Antriebseinheit 8 in der Höhe H verstellbar. Allerdings ist vorteilhafterweise auch hier eine zusätzliche manuelle Verstellbarkeit vorgesehen, um es im Falle einer Störung oder eines Ausfalles der motorischen Höhenverstellung zu ermöglichen, den Kaffeeauslauf 1 dennoch in der Höhe zu verschieben. Eine geeignete Startposition für den höhenverstellbaren Getränkeauslauf 1 wird hier nach der Auslösung der Getränkeausgabe zunächst selbsttätig eingenommen. Während der Getränkeausgabe wird dann auch hier der Getränkeauslauf 1 mittels der Steuerungseinheit 6 und der Antriebseinheit 8 im wesentlichen für die Dauer der Getränkeausgabe selbsttätig etwa in dem Mass nach oben (Bewegungsrichtung B) bewegt, in dem der Einfüllspiegel des ausgegebenen Getränkes im Trinkgefäss 5 ansteigt.

Auch zur Realisierung dieser Ausführungsform genügt es, dass für die selbsttätige Höhenverstellung des Getränkeauslaufs aus der Startposition eine einfache Steuerung vorhanden ist. Ein Positionssensor 9 muss allerdings vorhanden sein, weil die Startposition sonst nicht selbsttätig ansteuerbar ist. Auch bei dieser Ausführungsform kann davon ausgegangen werden, dass der Steuerung aufgrund der Vorwahl der Getränkeart sowohl Art (z.B. Kaffee, Espresso oder Cappuccino und somit auch die ungefähre Tassengrösse) als auch Anzahl der unterstellten Trinkgefässe prinzipiell bekannt sind. Zusammen mit den ebenfalls bekannten Ausflussraten kann somit die notwendige approximative Geschwindigkeit der Höhenverstellung des Getränkeauslaufs abgeleitet werden.

Aufgrund der bei der Auslösung der Getränkeausgabe bereits bekannten Informationen in Bezug auf die Getränkewahl und der Art und Anzahl der verwendeten Trinkgefässe könnte zumindest eine sehr approximative automatische Bestimmung der einzunehmenden Startposition bereits erfolgen. Da aber ein solches Verfahren relativ unsicher ist und insbesondere den individuellen Gepflogenheiten der Anwender (hinsichtlich Art und Grösse der verwendeten Tassen) nur wenig Rechnung trägt, ist es bevorzugt, die Startpositionswerte durch den Anwender in einer Lern- bzw. Programmierphase der Getränkebereitungsmaschine eingeben zu lassen. Bei dieser Ausführungsform ist deshalb vorgesehen, dass der Anwender vorgängig, d.h. bei einer in diesem Fall notwendigen Programmierung oder Parametereingabe an der Steuerungseinheit 6, die notwendigen Eingaben aufgrund der von ihm im täglichen Gebrauch verwendeten Tassen oder Trinkgefässe selber macht. Die Steuerungseinheit 6 muss natürlich für ein solches Verfahren vorgesehen sein und es muss ein geeignetes Erfassungsverfahren definiert sein. Ein geeignetes Erfassungsverfahren könnte beispielsweise einfach darin bestehen, dass die im täglichen Gebrauch verwendete Kaffeetasse auf die Abstellfläche 4 gestellt wird, der Getränkeauslauf 1 manuell oder motorisch in die gewünschte Startposition gebracht und anschliessend mit einer vordefinierten Eingabekombination an den Bedienelementen 7 der Steuerungseinheit ein Erfassungskommando eingegeben wird, um für die Situation "Startpositionsdefinition bei Kaffeebezug" die aktuell gemessene Höhe H mit dem Positionssensor 9 zu erfassen und zu speichern.

Bei beiden bevorzugten Ausführungsformen kann zudem auch vorgesehen sein, dass der Getränkeauslauf 1 nach Beendigung der Getränkeausgabe selbsttätig in eine Grundstellung bewegt wird.

Weitere Ausführungsformen können darin bestehen, dass an der Stelle einer Steuerung für die selbsttätige Höhenverstellung des Getränkeauslaufs aus der Startposition eine Regelung eingesetzt wird. Da im wesentlichen angestrebt wird, den Getränkeauslauf 1 etwa im gleichen Masse nach oben zu bewegen wie der Einfüllspiegel 10 des ausgegebenen Getränkes im Trinkgefäss 5 ansteigt, kann natürlich auch eine Regelungseinrichtung zur Regelung des Abstandes A eingesetzt werden. Um die Ist-Werte des Abstandes A erfassen zu können, muss in diesem Fall neben dem Positionssensor 9 noch ein weiterer Sensor (nicht dargestellt) zur Erfassung des effektiven Einfüllspiegels 10 vorhanden sein.

Im Zuge von noch weiter gehenden Automatisierungsschritten können schliesslich auch noch eigentliche Trinkgefässerkennungsvorrichtungen dazutreten, die es der Getränkebereitungsmaschine ermöglichen, Art, Grösse und Anzahl der bereitgestellten Trinkgefässe und damit auch die dazu passenden Startpositionen selbsttätig zu erkennen und einzunehmen. Damit kann letztlich erreicht werden, dass einem Anwender, selbst wenn dieser mit dem ihm vorliegenden Maschinentyp der Getränkebereitungsmaschine nicht vertraut ist, beispielsweise stets Kaffee- oder Espressogetränke in guter Qualität und optimaler Crema zur Verfügung gestellt werden.

## Patentansprüche

1. Getränkebereitungsmaschine, insbesondere eine Kaffeemaschine, mit einem höhenverstellbaren Getränkeauslauf (1), wobei
- die Getränkebereitungsmaschine eine Steuerungseinheit (6), eine Antriebseinheit (8) für den höhenverstellbaren Getränkeauslauf (1) sowie Bedienelemente (7) zur Bedienung der Getränkebereitungsmaschine aufweist und wobei
- der höhenverstellbare Getränkeauslauf (1) eine Auslaufeinheit mit mindestens einem Auslaufrohr (3) aufweist,
**dadurch gekennzeichnet, dass**
der höhenverstellbare Getränkeauslauf (1) mittels der Steuerungseinheit (6) und der Antriebseinheit (8) nach der Auslösung der Getränkeausgabe aus einer Startposition und im wesentlichen für die Dauer der Getränkeausgabe selbsttätig nach oben bewegbar ist.

2. Getränkebereitungsmaschine nach Patentanspruch 1, **dadurch gekennzeichnet, dass** der Getränkeauslauf (1) manuell und motorisch mittels der Antriebseinheit (8) in der Höhe verstellbar ist.

3. Getränkebereitungsmaschine nach Patentanspruch 1 oder 2, **dadurch gekennzeichnet, dass** ein Sicherheitsmittel, vorzugsweise eine Rutschkupplung, zur Entkoppelung des Antriebs der Antriebseinheit (8) im Falle von Störungen oder Blockaden vorhanden ist.

4. Getränkebereitungsmaschine nach einem der Patentansprüche 1 bis 3, **dadurch gekennzeichnet, dass** für die selbsttätige Höhenverstellung des Getränkeauslaufs (1) aus der Startposition in der Steuerungseinheit (6) eine Steuerung oder eine Regelung vorhanden ist.

5. Getränkebereitungsmaschine nach Patentanspruch 4, **dadurch gekennzeichnet, dass** für die selbsttätige Höhenverstellung des Getränkeauslaufs (1) aus der Startposition eine Steuerung vorhanden ist und die Geschwindigkeit der Höhenverstellung aus der Startposition einstellbar oder in der Steuerungseinheit (6) programmierbar ist.

6. Getränkebereitungsmaschine nach Patentanspruch 4, **dadurch gekennzeichnet, dass** für die Höhenverstellbarkeit aus der Startposition eine Regelung vorhanden ist und ein Abstand A zwischen dem Auslaufende des Auslaufrohres (3) und dem Einfüllspiegel (10) eines ausgegebenen Getränkes in ein bereitgestelltes Trinkgefäss (5) mittels einer Messung des Abstandes A im wesentlichen konstant gehalten wird.

7. Getränkebereitungsmaschine nach einem der Patentansprüche 1 bis 6, **dadurch gekennzeichnet, dass** die Startposition des Getränkeauslaufes (1) manuell einnehmbar oder motorisch mit der Antriebseinheit (8) ansteuerbar bzw. einnehmbar ist.

8. Getränkebereitungsmaschine nach Patentanspruch 7, **dadurch gekennzeichnet, dass** die Startposition des Getränkeauslaufes (1) motorisch mittels der Antriebseinheit (8) ansteuerbar bzw. einnehmbar ist, wobei die Steuerungseinheit (6) Startpositionswerte aufgrund einer Getränkevorwahl an den Bedienelementen bereitstellt.

9. Getränkebereitungsmaschine nach Patentanspruch 7 oder 8, **dadurch gekennzeichnet, dass** die Startposition des Getränkeauslaufes (1) aufgrund gespeicherter Werte eines vorgängig durchgeführten Programmiervorganges von Startpositionswerten für individuelle Trinkgefässgrössen von der Steuerungseinheit (6) bereitgestellt wird.

10. Getränkebereitungsmaschine nach Patentanspruch 7, **dadurch gekennzeichnet, dass** Startposition des Getränkeauslaufes (1) motorisch mittels der Antriebseinheit (8) einnehmbar ist, wobei die Steuerungseinheit Startpositionswerte aufgrund von Daten einer Trinkgefässerkennungsvorrichtung bereitstellt.

11. Getränkebereitungsmaschine nach Patentanspruch 10, **dadurch gekennzeichnet, dass** die Trinkgefässerkennungsvorrichtung einen Sensor oder eine Sensoreinrichtung umfasst, der/die die Grösse und Anzahl der bereitgestellten Trinkgefässe erkennt.

12. Getränkebereitungsmaschine nach einem der Patentansprüche 1 bis 11, **dadurch gekennzeichnet, dass** der Getränkeauslauf (1) eine Auslaufrohrgruppe mit mehreren Auslaufrohren (3) für gleiche oder verschiedene Fluide wie Kaffee, Milch, Wasser oder Dampf umfasst.

13. Getränkebereitungsmaschine nach Patentanspruch 12, **dadurch gekennzeichnet, dass** die Auslaufrohrgruppe zwei Auslaufrohre (3) für Kaffee umfasst, die in ihrem horizontalen Abstand verstellbar sind.

14. Getränkebereitungsmaschine nach einem der Patentansprüche 1 bis 13, **dadurch gekennzeichnet, dass** der Getränkeauslauf (1) nach Beendigung der Getränkeausgabe selbsttätig in eine Grundstellung bewegbar ist.

## Claims

1. A beverage-preparation machine, in particular a coffee machine, with a height-adjustable beverage distributor (1), wherein
- the beverage-preparation machine has a control unit (6), a drive unit (8) for the height-adjustable beverage distributor (1) and operating elements (7) for driving the beverage-producing machine, and wherein
- the height-adjustable beverage distributor (1) comprises a discharge unit provided with at least one discharge tube (3),
**characterized in that**
the height-adjustable beverage distributor (1) is automatically upwardly displaceable from a starting position by means of the control unit (6) and the drive unit (8), after initiating beverage distribution and essentially for the total duration of beverage distribution.

2. The beverage-preparation machine according to Claim 1,
**characterized in that**
the beverage distributor (1) is adjustable in height both manually and by motorised means by means of the drive unit (8).

3. The beverage-preparation machine according to Claim 1 or 2,
**characterized in that**
a safety means, preferably a friction clutch, is present for decoupling the drive of the drive unit (8) in the event of faults or blockages.

4. The beverage-preparation machine according to any one of Claims 1 to 3,
**characterized in that**
a controller or regulator is present in the control unit (6) for the automatic height adjustment of the beverage distributor (1) from the starting position.

5. The beverage-preparation machine according to Claim 4,
**characterized in that**
a controller is present for the automatic height adjustment of the beverage distributor (1) from the starting position, and the speed of the height adjustment from the start position is adjustable or programmable in the control unit (6).

6. The beverage-preparation machine according to Claim 4,
**characterized in that**
a regulator is present for the height adjustability from the starting position, and a distance A between the discharge end of the discharge tube (3) and the fill level (10) of a beverage discharged into a beverage container (5) provided is kept essentially constant by means of a measurement of the distance A.

7. The beverage-preparation machine according to one of Claims 1 to 6,
**characterized in that**
the starting position of the beverage discharge (1) can be engaged manually, or can be controlled or engaged by motorised means with the drive unit (8).

8. The beverage-preparation machine according to Claim 7,
**characterized in that**
the starting position of the beverage discharge (1) can be controlled or engaged by motorised means by means of the drive unit (8), wherein the control unit (6) provides starting position values on the basis of a beverage pre-selection at the operating elements.

9. The beverage-preparation machine according to Claim 7 or 8,
**characterized in that**
the starting position of the beverage discharge (1) is provided by the control unit (6) on the basis of stored values from a programming process of starting position values for individual beverage container sizes executed in advance.

10. The beverage-preparation machine according to Claim 7,
**characterized in that**
starting position of the beverage discharge (1) can be engaged by motorised means by means of the drive unit (8), wherein the control unit provides starting position values on the basis of data from a beverage container recognition device.

11. The beverage-preparation machine according to Claim 10,
**characterized in that**
the beverage container recognition device comprises a sensor or sensor device, which recognises the size and number of the beverage containers provided.

12. The beverage-preparation machine according to one of Claims 1 to 11,
**characterized in that**
the beverage discharge (1) comprises a discharge tube group with multiple discharge tubes (2) for the same or different fluids such as coffee, milk, water or steam.

13. The beverage-preparation machine according to Claim 12,
**characterized in that**
the discharge tube group comprises two discharge tubes (3) for coffee, the horizontal distance between which is adjustable.

14. The beverage-preparation machine according to one of Claims 1 to 13,
**characterized in that**
on completion of the beverage distribution the beverage discharge (1) can be automatically moved into a normal position.

## Revendications

1. Machine de préparation de boissons, notamment une machine à café, comportant un distributeur de boissons (1) réglable en hauteur, dans laquelle :
- la machine de préparation de boissons présente une unité de commande (6), une unité d'entraînement (8) pour le distributeur de boissons (1) réglable en hauteur ainsi que des éléments de manipulation (7) pour la manipulation de la machine de préparation de boissons et dans laquelle
- le distributeur de boissons (1) réglable en hauteur présente une unité de distributeur comportant au moins un tuyau de distributeur (3),
**caractérisée en ce que**
le distributeur de boissons (1) réglable en hauteur peut être déplacé à partir d'une position de départ au moyen de l'unité de commande (6) et de l'unité d'entraînement (8) après le déclenchement de la distribution de boissons et peut être essentiellement déplacé automatiquement vers le haut pendant la durée de la distribution de boisson.

2. Machine de préparation de boissons selon la revendication 1, **caractérisée en ce que** le distributeur de boissons (1) peut être réglé en hauteur manuellement et de manière motorisée au moyen de l'unité d'entraînement (8).

3. Machine de préparation de boissons selon la revendication 1 ou 2, **caractérisée en ce que** un moyen de sécurité, de préférence un accouplement à patinage, pour découpler l'entraînement de l'unité d'entraînement (8) est présent en cas de perturbations ou de blocages.

4. Machine de préparation de boissons selon une des revendications 1 à 3, **caractérisée en ce que**, pour le réglage en hauteur automatique du distributeur de boissons (1) à partir d'une position de départ, une commande ou une régulation est présente dans l'unité de commande (6).

5. Machine de préparation de boissons selon la revendication 4, **caractérisée en ce que**, pour le réglage en hauteur automatique du distributeur de boissons (1) à partir de la position de départ, une commande est présente et la vitesse du réglage en hauteur peut être réglée à partir de la position de départ ou être programmée dans l'unité de commande (6).

6. Machine de préparation de boissons selon la revendication 4, **caractérisée en ce que**, pour la faculté de réglage en hauteur à partir de la position de départ, une régulation est présente et un espacement A entre l'extrémité de distributeur du tuyau de distributeur (3) et la cible de remplissage (10) d'une boisson distribuée dans un gobelet à boisson (5) fourni est maintenu essentiellement constant au moyen d'une mesure de l'espacement A.

7. Machine de préparation de boissons selon une des revendications 1 à 6, **caractérisée en ce que** la position de départ du distributeur de boissons (1) peut être adoptée manuellement ou commandée, respectivement adoptée de manière motorisée avec l'unité d'entraînement (8).

8. Machine de préparation de boissons selon la revendication 7, **caractérisée en ce que** la position de départ du distributeur de boissons (1) peut être commandée, respectivement adoptée de manière motorisée au moyen de l'unité d'entraînement (8), moyennant quoi l'unité de commande (6) fournit des valeurs de position de départ sur la base d'une présélection d'une boisson sur les éléments de manipulation.

9. Machine de préparation de boissons selon la revendication 7 ou 8, **caractérisée en ce que** la position de départ du distributeur de boissons (1) est fournie par l'unité de commande (6) sur la base de valeurs mémorisées d'un processus de programmation exécuté préalablement à partir des valeurs de position de départ pour des tailles de gobelets à boissons individuelles.

10. Machine de préparation de boissons selon la revendication 7, **caractérisée en ce que** la position de départ du distributeur de boissons (1) peut être adoptée de manière motorisée au moyen de l'unité d'entraînement (8), moyennant quoi l'unité de commande fournit des valeurs de position de départ sur la base des données d'un dispositif de reconnaissance de gobelets à boissons.

11. Machine de préparation de boissons selon la revendication 10, **caractérisée en ce que** le dispositif de reconnaissance de gobelets à boissons comprend un capteur ou un dispositif de capteur, qui reconnaît la taille et le nombre des gobelets à boissons fournis.

12. Machine de préparation de boissons selon une des revendications 1 à 11, **caractérisée en ce que** le distributeur de boissons (1) comprend un groupe de tuyaux de distributeur comportant plusieurs tuyaux de distributeur (3) pour des fluides identiques ou différents comme du café, du lait, de l'eau ou de la vapeur.

13. Machine de préparation de boissons selon la revendication 12, **caractérisée en ce que** le groupe de tuyaux de distributeur comprend deux tuyaux de distributeur (3) pour le café, qui peuvent être réglés dans leur espacement horizontal.

14. Machine de préparation de boissons selon une des revendications 1 à 13, **caractérisée en ce que** le distributeur de boissons (1) peut être déplacé automatiquement en une position de démarrage après la fin de la distribution de boissons.
